# EUROPÄISCHE PATENTSCHRIFT

(11) **EP 1 456 833 B1**
(45) Veröffentlichungstag und Bekanntmachung des Hinweises auf die Patenterteilung: **20.07.2016**
(21) Anmeldenummer: 02727276.4
(22) Anmeldetag: 27.03.2002
(51) Int. Cl.: G09G 5/00, G09G 5/34, G06F 3/147, H04M 1/247, G06F 3/033

(54) **VERFAHREN ZUR ANZEIGE VON STANDARDISIERTEN GROSSFORMATIGEN INTERNET-SEITEN IN EINHANDENDGERÄTEN MIT MOBILFUNKANSCHLUSS**
METHOD FOR THE DISPLAY OF STANDARDISED LARGE-FORMAT INTERNET PAGES WITH FOR EXAMPLE HTML PROTOCOL ON HAND-HELD DEVICES WITH A MOBILE RADIO CONNECTION
PROCÉDÉ D'AFFICHAGE DE PAGES INTERNET NORMALISÉES GRAND FORMAT À L'AIDE DU PROTOCOLE HTML, PAR EXEMPLE, SUR DES TERMINAUX MOBILES ÉQUIPÉS D'UNE CONNEXION MOBILE À INTERNET

(30) Priorität: 06.04.2001 DE 10117457
(43) Veröffentlichungstag der Anmeldung: 15.09.2004
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter
(86) Internationale Anmeldenummer: PCT/DE2002/001120
(87) Internationale Veröffentlichungsnummer: WO 2002/082418

(56) Entgegenhaltungen:
- EP-A- 0 651 543
- EP-A- 1 055 993
- EP-A- 1 168 293
- EP-A2- 0 172 433
- WO-A-00/68930
- WO-A-02/46903
- WO-A-97/07467
- WO-A-99/18495
- WO-A-99/28812
- WO-A-02/084466
- GB-A- 2 316 466
- JP-A- H0 580 832
- US-A- 5 187 776
- US-A- 5 801 677
- US-A- 6 012 030
- US-A- 6 081 277

## Beschreibung

Die Erfindung betrifft ein Verfahren zur Anzeige von standardisierten Internet-Seiten mit HTML-Protokoll in Einhandendgeräten mit Mobilfunkanschluss nach dem Oberbegriff des Patentanspruchs 1.

Das Internet ist heute ein beliebtes Kommunikationsmittel mit exponentiell steigenden Benutzerzahlen. Eine der wichtigste Applikationen des Internet ist das World Wide Web (WWW) welches auf der Basis von Hypertext Markup Language (HTML) betrieben wird (neuerdings auch XML-eine Protokollerweiterung), s. Lit 1, S. 650 ff.
Der häusliche oder betriebliche Personal Computer (PC) dient dabei als Zugangs-Gerät. Er wird mit einem Internet-Browser (beispielsweise Microsoft Explorer oder Netscape Navigator) sowie bedarfsweise einer Zugangs-Software für den Internetzugang (über einen Internet Service Provider) betrieben, der die sog. Client-Applikation zur Verfügung stellt. Gegenstelle ist ein Server, bzw. Host-Rechner im Internet, der die gewünschte Information via HTML-Pages zur Verfügung stellt. Das HTML-Protokoll wird mittels TCP/IP-Protokoll als Transportmittel übertragen. Alle Protokolle sind von IETF (Internet Engineering Task Force WWW.IETF.ORG) standardisiert und werden ständig erweitert.

In Folge ergonomischer Sensibilisierung sowie fallender Preis auf dem Gerätemarkt, kann heute ein 17 Zoll-PC-Monitor mit einer Auflösung von 1024 x 768 Bildpunkten als Standart angesehen werden.
Auf diesen Sichtgeräten lassen sich die HTML-Seiten hervorragend darstellen. Da eine Bezahlung für Information im Internet bisweilen nicht üblich ist, leben die Dienstleister hauptsächlich von Werbeeinnahmen. Diese werden als bunte stehende oder bewegte Bilder in die HTML-Seiten eingeblendet, wobei man sich den großflächigen Monitor zu Nutze macht.

Andererseits werden derzeit digitale paketorientierte Übertragungsdienste im Mobilfunkbereich (GSM-GPRS, bzw. zukünftig UMTS) eingeführt. Diese Dienste erlauben die Übertragung von TCP/IP-Protokollen und den schnellen Internet-Zugang (Lit.2, Seite 15, Mit Tempo ins Netz).
Wenn nicht gerade ein Notebook oder ein PC mit ergonomischem Bildschirm im Anschluss an das Mobilfunkgerät (Handy) verwendet wird, sondern das Display des mobilen Endgerätes selbst als Sichtgerät dient, ergeben sich jedoch erhebliche Probleme.

Abgesehen davon, dass die technischen Möglichkeiten zur Anzeige von HTML-Seiten im geräteseitigen Display noch nicht gegeben sind, ergeben sich unlösbare optische Probleme. Die angezeigte Information wäre einfach zu klein, so dass sie mit dem menschlichen Auge nicht gelesen werden kann. Das menschliche Auge kann den gut gefüllten Inhalt eines Bildschirmes mit 40 cm Diagonale nach einer Verkleinerung auf ein Format mit 3-6 cm Diagonale physiologisch nicht mehr auflösen, d.h. man kann solch eine Seite in aller Regel nicht mehr lesen.

Daraus folgt jedoch, dass der gesamte weltweite Bestand an Internetseiten für den mobilen Betrieb mit Einhand-Endgeräten, wie Handies oder PDAs (Personal Digital Assistent) nicht nutzbar ist!

Dieses wurde frühzeitig erkannt, so dass die Industrie auf Abhilfe sann. Neue Protokolle, wie WML (Wireless Markup Language) oder WAP (Wireless Application Protocoll) sind in der Standardisierung. Lit 2 (S.18ff, WAP-Report) vermittelt eine Übersicht über die verfügbaren Dienste und die Abbildungsqualität der Displays. Das prinzipielle Verfahren bei drahtlosen Diensten beruht darauf, dass eine reduzierte gut ablesbare Information auf den Displays zur Anzeige kommt.

Nachteil der Verfahrensweise ist jedoch, dass der gesamte Bestand an HTML-Seiten im Internet für dieses Verfahren nicht genutzt werden kann und die WAP-Seiten getrennt neu erstellt und gepflegt werden müssen.

EP 1 055 993 A1 oder EP 1 168 293 A2 offenbaren Verfahren zur Anzeige von standardisierten Internet-Seiten, die für die Darstellung auf großflächigen Bildschirmen, die mittels HTML- oder XML-Protokoll erstellt wurden, auf kleinen Displays von Einhandendgeräten , wobei das Einhandendgerät sowohl elektronisch als auch taktil eine über die Anzeigemöglichkeit des Einhandendgerätes hinausgehenden größeren Bildschirmdarstellung verwaltet, innerhalb derer ein jeweils gut lesbarer Teilausschnitt des Gesamtbildes mittels taktiler oder sprachlicher Steuerung durch den Benutzer selektierbar ist und auf der geräteseitigen kleinen Display als Bildausschnitt eines virtuellen größeren Bildes zur Anzeige gebracht wird.

US 6 081 277 A offenbart ein Verfahren und eine Vorrichtung zur Steuerung einer Anzeige, wobei die anzuzeigende Bildinformation auf das Format der Anzeige komprimiert wird, damit die vollständige Bildinformation auf der Anzeige dargestellt werden kann.

EP 0 651 543 A2 beschreibt einen mobiles Endgerät mit verbesserter Anzeige- und Zoomfunktion. Die Steuerung der Funktionen erfolgt über ein berührungsempfindliches Display.

US 6 012 030 A offenbart Verfahren zur Sprachsteuerung von Kommunikationsendgeräten.

US 5 801 677 A offenbart ein Verfahren zur Steuerung der Anzeige von Dokumenten auf zwei Displays.

WO 00 68930 A1 offenbart ein Gerät mit Anzeigeeinrichtung und Drucktastenbetätigung, wobei die Drucktasten an verschiedenen Stellen des Gerätes angeordnet sein können.

US 5 187 776 A offenbart einen Bildeditor mit Zoomfunktion, wobei die gezoomte Bildinformation innerhalb eines Fensters des Gesamtbildes dargestellt wird.

JP H 05 80832 A offenbart ein Verfahren zum Vergrößern (Zoomen) von Bildinformationen zur Anzeige auf einen Display.

EP 0 172 433 A2 beschreibt ein Verfahren zur Cursorsteuerung der Anzeige von Bildinformationen auf einem Display.

Der vorliegenden Erfindung liegt die Aufgabe zugrunde, ein Verfahren vorzuschlagen, auf dessen Basis herkömmliche standardisierte Internetseiten, beispielsweise gemäß HTML-oder XML-Protokoll unter Verwendung von kleinformatigen Einhand-Endgeräten (beispielsweise Handy oder Personal Digital Assistent PDA) mit kleinformatigen Displays zur Anzeige gebracht werden können.

Gelöst wird diese Aufgabe durch die kennzeichnenden Merkmale des Patentanspruchs 1.

Die Erfindung wird unter Verwendung von Zeichnungsfiguren, die hier lediglich eine mögliche Ausführungsart am Beispiel eines schematisch abgebildeten Gerätes darstellen, erläutert.
Fig. 1 zeigt beispielhaft eine beliebige Internetseite mit Browser-Fenster. Letzteres ist wichtig, damit die Einstellungen ersichtlich sind und mittels dem Feld "Adresse" die Eingabe der sog. URL für die Navigation im Internet möglich ist.
Fig. 2 zeigt das Ergebnis, wenn diese Internetseite auf ein realistisches Display-Format geschrumpft wird. Die Endgerätegröße in der Abbildung entspricht dabei in etwa der tatsächlichen Größe eines Mobilfunkgerätes, das Display ist bereits sehr groß dargestellt. Hier kann nichts mehr gelesen werden.
Fig. 3 zeigt die erfindungsgemäße Verfahrensweise. Es wird die im Internet üblich HTML-Seite, optional mit Browser-Feld, zur Anzeige verwendet.

Die dargestellte Information wird dabei auf ein noch lesbares Maß verkleinert (3.1) und ausschnittsweise (3.3) im Display des Mobilfunkgerätes (3.2) zur Anzeige gebracht. Dieses Verfahren ist sowohl bei HTML-Seiten anwendbar, die einseitig einen größeren Bildschirm füllen, als auch bei solchen, die den Darstellungsumfang größerer Bildschirme sprengen und üblicherweise mittels seitlicher Rollbalkensteuerung (bei den üblichen Browsern von Microsoft und Netscape) über den verfügbaren Bildschirm transportiert werden.

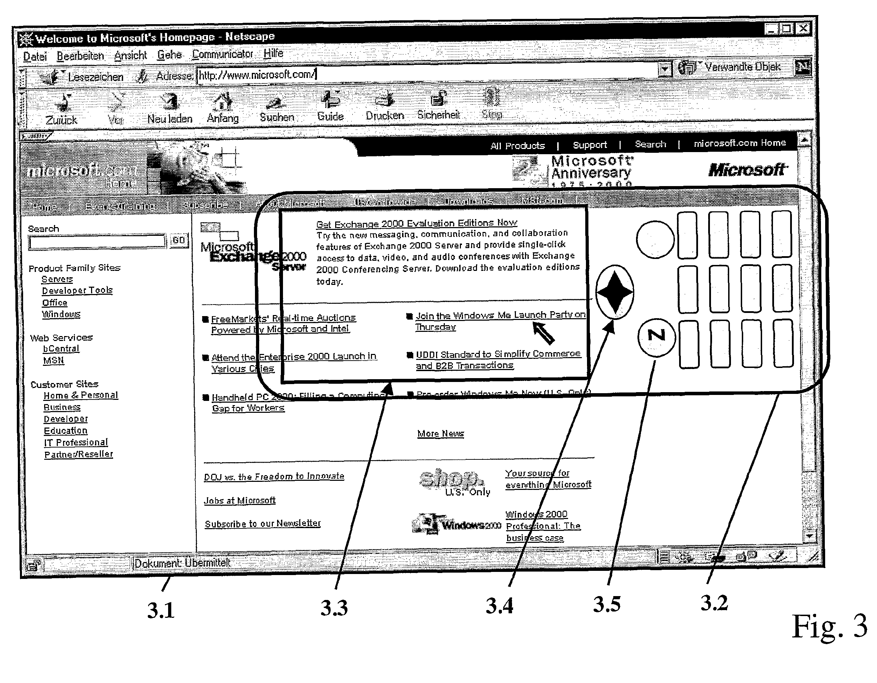

Wesentliche Voraussetzung für die Akzeptanz und damit für den kommerziellen Erfolg eine solchen Lösung ist die ergonomische Steuerung (Bedienung/Navigation) der Display-Anzeige.
Sie wird wie folgt realisiert.
Ausgangsbasis für die Erläuterung ist die komplette Verkleinerung der HTML-Seite auf das vorhandene Display-Format. Diese Darstellung dienst als Übersicht zur groben Erkennung der betreffenden Stelle mit der gewünschten Information. Ein Zeigeinstrument (vergleichbar dem Mauszeiger beim PC) wird zur betreffenden Position bewegt z.B. mittels Positionierungstaste (3.4), durch Sprachsteuerung oder wahlweise mittels Stift oder Finger auf einem berührungssensitivem Display. Danach wird per Tastendruck auf eine Zoomtaste (3.5) auf eine vergrößerte Anzeige umgeschaltet. Letzteres kann stufenlos oder in mindestens zwei Stufen (groß/klein) erfolgen. Wahlweise kann auch diese Funktion durch sensitives Display ausgelöst werden.
Das Resultat dieser Vergrößerung ist in Fig. 3.3 zu sehen. Durch erneuten Tastendruck erfolgt eine Rückschaltung zum verkleinerten Anzeige, wonach erneut selektiert werden kann.

Zusätzlich kann bei vergrößerter Anzeige der dargestellte Bereich als Ausschnitt eines virtuellen größeren Bildschirmes durch Neupositionierung der Zeigerfunktion beliebig gewählt werden, wobei der Bildausschnitt vorzugsweise stufenlos über das virtuelle Bild verschoben wird, wenn das Zeigerinstrument an eine der Display-Kanten stößt.

Es stehen somit zwei alternative Verfahren zur bequemen Navigation der kleinen Displayanzeige innerhalb eines größeren virtuellen Bildes zur Verfügung. Die verwendeten Tasten können für andere Funktionen mehrfach belegt sein. Weiterhin sollten die beiden für die Display-Steuerung verwendeten taktilen Elemente derart auf Vorder-, Seiten-oder Rückteil des Gerätes angeordnet sein, dass sie ohne Änderung der Griffposition einhändig bedienbar sind. Die technische Realisierung erfolgt derart, dass zwei Bildspeicher vorhanden sind. Ein großer Bildspeicher speichert die virtuelle Darstellung. Der aktuelle Bildausschnitt wird dabei in den kleineren Bildspeicher, der als Pufferspeicher für das Display dient, kopiert. Bei alternativer Ausführung wird ein Teil des großen Bildspeichers als Display-Speicher verwendet, indem die Speicherbereiche, die für die jeweilige Display-Anzeige relevant sind, als Speicheradressen (Bildpunkt-Vektoren) für die Display-Anzeige verwendet werden. Diese Ausführungsart spart Speicherplatz und insbesondere Kopierzeit. Die verkleinerte Komplettanzeige, bzw. unterschiedliche Vergrößerungen bedingen jedoch einen zweiten Bildspeicher für die Display-Anzeige, wobei die Information des virtuellen Bildes durch rechnerische Umwandlung (bzw. Wegnahme von Bildpunkten) auf das kleinere Maß reduziert wird. Der verbleibende virtuelle Bildspeicher gewährleistet, dass jederzeit in ein größere Darstellung zurückgeschaltet werden kann, ohne dass Bildinformationen durch vorherige Reduktion verloren gehen.

Fig. 3 zeigt nur die Bedienelemente, die zur Display-Steuerung sinnvoll erforderlich sind. Die Tasten sind zur besseren Anschauung lediglich beispielhaft auf der Gehäuseoberseite dargestellt. Andere Bedienelemente für Gerätefunktionen sind nicht dargestellt, da im Zusammenhang mit der Erfindung nicht wesentlich.

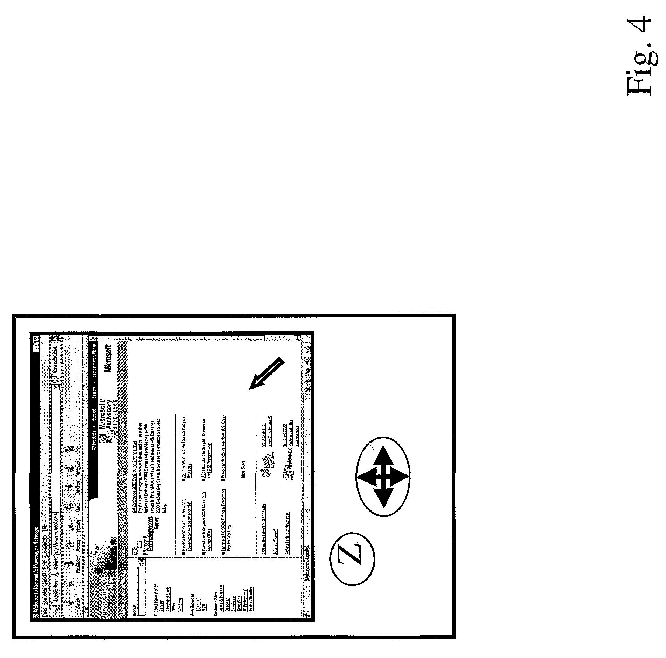

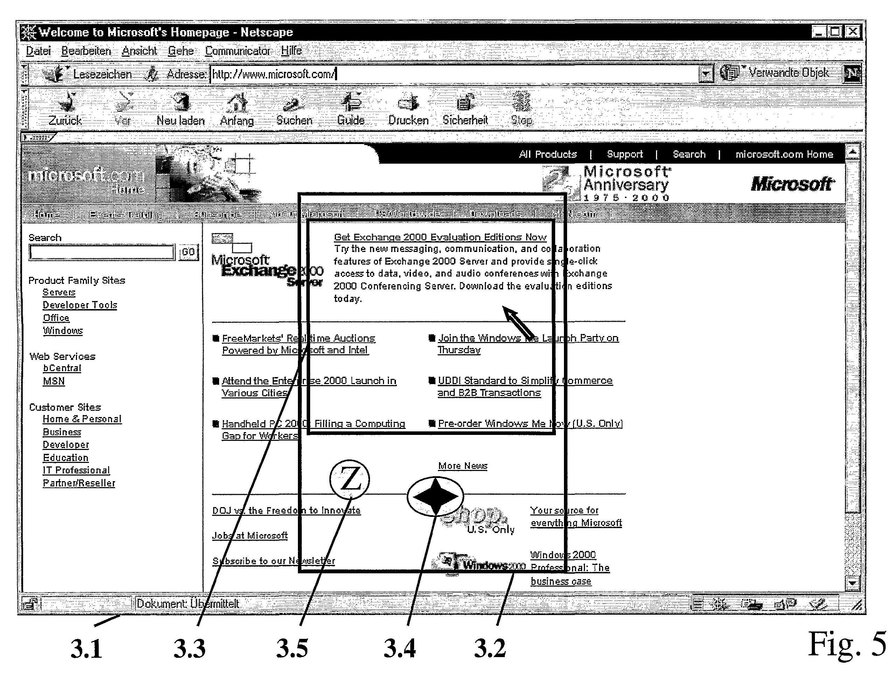

Die Fig. 4 und 5 zeigen den gleichen Sachverhalt bei einem PDA (übliches Geräteformat).

### Literatur

Lit. 1 Dr.Sidnie Feit, TCP/IP, McGraw-Hill USA 1999, ISBN 0-07-022069-7
Lit. 2 Connect Heft 18, 24.08.2000.

### Abbildungen

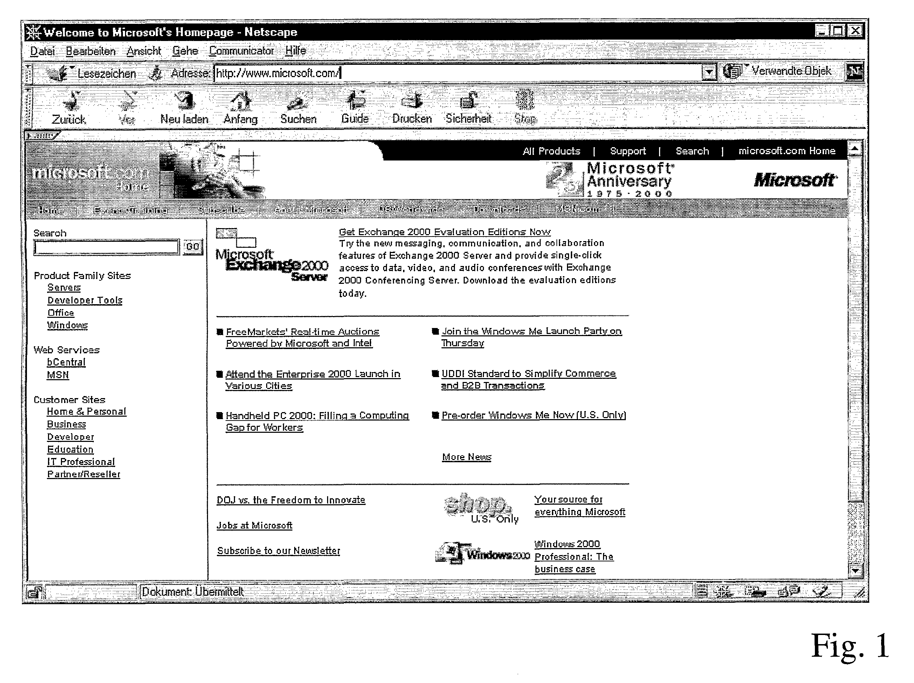

Fig. 1: Internet-Seite als Beispiel einer HTML-Seite

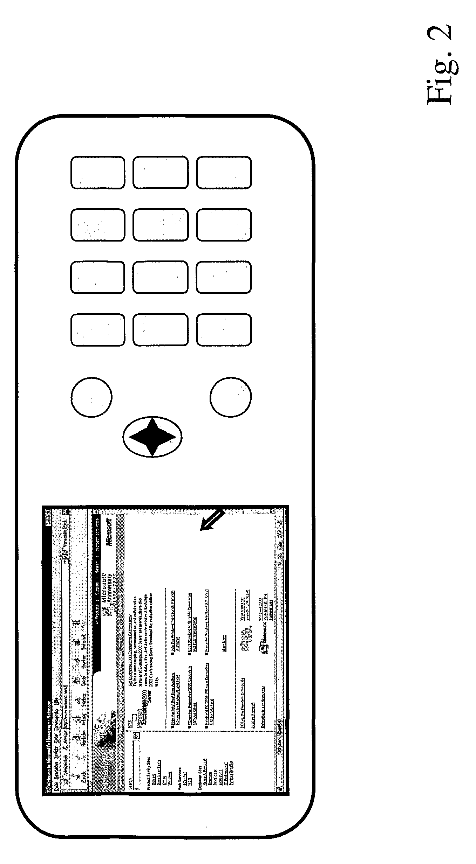

Fig. 2: Verkleinerte Darstellung in kleinem Display (Mobilfunkgerät)
Fig. 3: Lesbare Darstellung in kleinem Display mit virtuellem Bildschirm
Fig. 4: Verkleinerte Darstellung in kleinem Display (PDA)
Fig. 5: Lesbare Darstellung in kleinem Display mit virtuellem Bildschirm

## Patentansprüche

1. Verfahren zur Anzeige von standardisierten Internet-Seiten, die für die Darstellung auf großflächigen Bildschirmen, die mittels HTML- oder XML-Protokoll erstellt wurden, auf kleinen Displays von Einhandendgeräten , wobei das Einhandendgerät sowohl elektronisch als auch taktil eine über die Anzeigemöglichkeit des Einhandendgerätes hinausgehenden größeren Bildschirmdarstellung verwaltet, innerhalb derer ein jeweils gut lesbarer Teilausschnitt des Gesamtbildes mittels taktiler oder sprachlicher Steuerung durch den Benutzer selektierbar ist und auf der geräteseitigen kleinen Display als Bildausschnitt eines virtuellen größeren Bildes zur Anzeige gebracht wird, **dadurch gekennzeichnet,**
**dass** eine Verkleinerung der HTML-Seite auf das vorhandene Display-Format erfolgt, wobei die Darstellung als Übersicht zur groben Erkennung der betreffenden Stelle mit der gewünschten Information dient, wobei eine Zeigeinrichtung mittels einer Positionierungstaste (3.4) zur betreffenden Position bewegt wird, wobei danach per Tastendruck auf eine Zoomtaste (3.5) auf eine vergrößerte Anzeige umgeschaltet wird und letzteres stufenlos oder in mindestens zwei Stufen erfolgen kann, wobei durch erneuten Tastendruck eine Rückschaltung zur verkleinerten Anzeige erfolgt, wonach erneut selektiert werden kann, und zusätzlich bei vergrößerter Anzeige der dargestellte Bereich als Ausschnitt eines virtuellen größeren Bildschirmes durch Neupositionierung der Zeigeeinrichtung beliebig gewählt werden kann, wobei der Bildausschnitt stufenlos über das virtuelle Bild verschoben wird, wenn die Zeigeeinrichtung an eine der Display-Kanten stößt, und
**dass** die Anzeigesteuerung mittels zwei taktilen Elementen realisiert ist, wobei die Positionierungstaste (3.5) die freie Positionierung der Zeigeeinrichtung auf dem Bildschirm des Einhandendgeräts ermöglicht, während die Zoomtaste (3.4) zur Vergrößerung oder Verkleinerung der selektierten Bereiche dient, wobei beide Bedienelemente derart ergonomisch am Gehäuse angeordnet sind, dass eine Bedienung beider Tasten ohne Änderung der jeweiligen Griffposition möglich ist, wobei dies durch frontseitige Anordnung der Positionierungstaste zwecks Daumenbedienung und rückseitiger Anordnung der Zoomtaste für Mittelfinger-Bedienung realisiert ist.

2. Verfahren gemäß Anspruch 1, **dadurch gekennzeichnet, dass** das Einhandendgerät über zwei Bildschirmspeicher verfügt, wobei ein kleinerer Bildspeicher als Pufferspeicher für das Display dient und ein größerer Bildspeicher zur Aufnahme des großformativen, virtuellen Gesamtbildes dient , wobei der Inhalt des Pufferspeichers mittels Kopierfunktion aus dem Bildspeicher, oder durch mathematische oder logische Verknüpfungen ermittelt wird.

3. Verfahren gemäß Anspruch 2, **dadurch gekennzeichnet, dass** bei der ausschnittsweisen Darstellung ohne Verkleinerung der Darstellung auf eine Kopie des aktuellen Anzeigebereiches vom Bildspeicher in den Pufferspeicher verzichtet wird, wenn ersatzweise die Speicherpositionen des Pufferspeichers innerhalb des Bildspeichers als Speicherplatzvektor für die Anzeigeelektronik verwendet wird.

4. Verfahren gemäß zumindest einem der Ansprüche 1-3, **dadurch gekennzeichnet, dass** eine Zeigeeinrichtung als Selektionskriterium für die Mitte eines zu vergrößernden Bereiches auf der verkleinerten Darstellung des Gesamtbildes mittels Stift oder Finger auf berührungssensitivem Bildschirm des Einhandendgeräts, mittels taktiler Mehrkoordinatenfunktion oder mittels Spracheingabe positioniert wird, wonach eine anschließende Vergrößerung auf ein ablesbares Vergrößerungs-Format, oder eine stufenlose Vergrößerung durch Loslassen der Positionierungsfunktion, durch Spracheingabe oder durch zusätzlichen Tastendruck erfolgt

5. Verfahren gemäß zumindest einem der Ansprüche 1-4, **dadurch gekennzeichnet, dass** das mehrfache Positionieren und Selektieren mittels der Zeigeeinrichtung innerhalb der verkleinerten Darstellung beliebig kombinierbar ist.

6. Verfahren gemäß zumindest einem der Ansprüche 1-5, **dadurch gekennzeichnet, dass** eine stufenlose Verschiebung der Ausschnittsweisen Darstellung des Bildschirms des Einhandendgeräts innerhalb des Bildspeichers dadurch erfolgen kann, dass die Zeigeeinrichtung zu einem Seitenrand des Bildschirms des Einhandendgeräts bewegt wird, wobei Anstelle der weiteren Verschiebung über den Rand hinaus sich in gleichem Maße das Ausschnittsfenster innerhalb des virtuellen größeren Bildes verschiebt.

7. Verfahren gemäß zumindest einem der Ansprüche 1-6, **dadurch gekennzeichnet, dass** die taktilen Elemente zur Display-Steuerung für andere Gerätefunktionen, die softwaremäßig realisiert sind, mehrfach belegt sind.

## Claims

1. Method for displaying standardised Internet pages created for displaying on large format screens by means of HTML or XML protocol, on small displays of one-hand terminals, wherein the one-hand terminal both electronically and tactilely manages a larger screen display which exceeds the display possibilities of the one-hand terminal and within which a clearly legible section of the full picture can be selected by the user by means of tactile or voice control and displayed on the small display of the terminal as a section of a virtual larger picture, **characterised in that** the HTML page is reduced to the available display format, wherein the display serves as a view for rough identification of the item concerned with the desired information, wherein a pointer is moved by means of a positioning key (3.4) to the position concerned, wherein after this a switch is made to an enlarged display by pressing a zoom key (3.5) and the latter can be effected steplessly or in at least two steps, wherein a switch is made back to the reduced display by pressing the key again, after which a fresh selection can be made, and in addition with the enlarged display the area displayed can be selected optionally as a section of a virtual larger picture by repositioning the pointer, wherein the section of the picture is moved steplessly over the virtual picture when the pointer meets one of the edges of the display, and **in that** the display control is realised by means of two tactile elements, wherein the positioning key (3.5) allows free positioning of the pointer on the screen of the one-hand terminal, while the zoom key (3.4) serves to enlarge or reduce the selected areas, wherein both control elements are arranged ergonomically on the housing in such a way that both keys can be operated without changing grip position, wherein this is realised by arranging the positioning key on the front side for thumb-operation and arranging the zoom key on the back side for middle-finger operation.

2. Method according to claim 1, **characterised in that** the one-hand terminal has two screen memories, wherein one smaller picture memory serves as a buffer memory for the display and a larger picture memory serves to receive the large-format, virtual full picture, wherein the contents of the buffer memory are determined by means of a copying function from the picture memory, or by mathematical or logical connections.

3. Method according to claim 2, **characterised in that** with the sectional display without reduction of the display, copying the current display area from the picture memory to the buffer memory is dispensed with if instead the memory position of the buffer memory within the picture memory is used as a memory location vector for the display electronics.

4. Method according to at least one of claims 1 to 3, **characterised in that** a pointer is positioned as selection criterion for the middle of an area to be enlarged on the reduced display of the full picture by means of a pen or finger on the touch-sensitive screen of the one-hand terminal, by means of a tactile multi-coordinate function or by means of voice input, after which a subsequent enlargement is made to a readable enlargement format, or a stepless enlargement is made by releasing the positioning function, by voice input or by additional pressing of a key.

5. Method according to at least one of claims 1 to 4, **characterised in that** the multiple positioning and selecting by means of the pointer within the reduced display can be combined as desired.

6. Method according to at least one of claims 1 to 5, **characterised in that** a stepless movement of the sectional display of the screen of the one-hand terminal within the picture memory can be effected by moving the pointer to one side edge of the screen of the one-hand terminal, wherein instead of the further movement beyond the edge the section window is moved within the virtual larger picture by the same amount.

7. Method according to at least one of claims 1 to 6, **characterised in that** the tactile elements for display control are assigned multiple times for other functions of the terminal which are realised by the software.

## Revendications

1. Procédé pour afficher sur des petits affichages de terminaux à une main des pages Internet normalisées qui ont été créées à l'aide d'un protocole HTML ou XML pour être visualisées sur des écrans à grande surface, étant précisé que le terminal à une main gère par voie aussi bien électronique que tactile une visualisation sur écran plus grande qui dépasse la possibilité d'affichage dudit terminal à une main et à l'intérieur de laquelle une partie bien lisible de l'image entière peut être sélectionnée par l'utilisateur à l'aide d'une commande tactile ou vocale et s'affiche sur le petit affichage prévu côté appareil, sous la forme d'un fragment d'une image plus grande virtuelle, **caractérisé**
**en ce qu'**une réduction de la page HTML au format d'affichage existant a lieu, étant précisé que la visualisation sert d'aperçu pour repérer approximativement l'endroit concerné contenant l'information voulue, qu'un dispositif pointeur est déplacé à l'aide d'une touche de positionnement (3.4) jusqu'à la position concernée, étant précisé qu'on passe ensuite, par pression sur une touche de zoom (3.5), à un affichage agrandi et que cela peut se faire de manière continue ou en au moins deux paliers, que grâce à une nouvelle pression sur une touche a lieu un retour à l'affichage réduit, après quoi une nouvelle sélection peut être faite, et qu'en supplément, lors de l'affichage agrandi la zone visualisée peut être choisie comme on veut sous forme de fragment d'un écran plus grand virtuel grâce à un repositionnement du dispositif pointeur, étant précisé que le fragment d'image est déplacé de manière continue sur l'image virtuelle quand le dispositif pointeur arrive contre l'un des bords de l'affichage, et
**en ce que** la commande d'affichage est réalisée à l'aide de deux éléments tactiles, étant précisé que la touche de positionnement (3.5) permet le libre positionnement du dispositif pointeur sur l'écran du terminal à une main, tandis que la touche de zoom (3.4) sert à agrandir ou à réduire les zones sélectionnées, étant précisé que les deux éléments de commande sont disposés sur le boîtier de manière ergonomique de telle sorte qu'une commande des deux touches soit possible sans modification de la position de préhension, étant précisé que cela est réalisé grâce à une disposition de la touche de positionnement côté avant pour une commande avec le pouce, et à une disposition de la touche de zoom côté arrière pour une commande avec le majeur.

2. Procédé selon la revendication 1, **caractérisé en ce que** le terminal à une main dispose de deux mémoires d'écran, étant précisé qu'une mémoire d'image plus petite sert de mémoire tampon pour l'affichage, et qu'une mémoire d'image plus grande sert à recevoir l'image entière virtuelle à grand format, étant précisé que le contenu de la mémoire tampon est obtenu à l'aide d'une fonction de copie à partir de la mémoire d'image, ou par opérations mathématiques ou logiques.

3. Procédé selon la revendication 2, **caractérisé en ce que** lors de la visualisation par fragment sans réduction de la visualisation, on renonce à une copie de la zone d'affichage de la mémoire d'image vers la mémoire tampon si en remplacement les positions de mémoire de la mémoire tampon sont utilisées à l'intérieur de la mémoire d'image comme vecteur d'emplacement de mémoire pour l'électronique d'affichage.

4. Procédé selon l'une au moins des revendications 1 à 3, **caractérisé en ce qu'**un dispositif pointeur est positionné, comme critère de sélection pour le milieu d'une zone à agrandir sur la visualisation réduite de l'image entière, à l'aide d'un stylet ou du doigt sur un écran à effleurement du terminal à une main, à l'aide d'une fonction multi-coordonnées tactile ou d'une saisie vocale, après quoi un agrandissement consécutif, à un format d'agrandissement apte à être lu, ou un agrandissement sans palier par relâchement de la fonction de positionnement a lieu par saisie vocale ou par pression supplémentaire de touche.

5. Procédé selon l'une au moins des revendications 1 à 4, **caractérisé en ce que** le positionnement et la sélection multiples sont combinables à volonté à l'aide du dispositif pointeur à l'intérieur de la visualisation réduite.

6. Procédé selon l'une au moins des revendications 1 à 5, **caractérisé en ce qu'**un déplacement continu de la visualisation par fragment de l'écran du terminal à une main à l'intérieur de la mémoire d'image peut se faire grâce au fait que le dispositif pointeur est amené jusqu'à un bord latéral de l'écran du terminal à une main, étant précisé qu'au lieu d'une poursuite du déplacement au-delà du bord, la fenêtre de fragment se déplace dans une même mesure à l'intérieur de l'image plus grande virtuelle.

7. Procédé selon l'une au moins des revendications 1 à 6, **caractérisé en ce que** les éléments tactiles, en vue d'une commande d'affichage pour d'autres fonctions d'appareil qui sont réalisées selon le logiciel, ont une affectation multiple.
